# FASCICULE DE BREVET EUROPEEN

(11) **EP 2 031 502 B1**
(45) Date de publication et mention de la délivrance du brevet: **10.05.2017**
(21) Numéro de dépôt: 08103434.0
(22) Date de dépôt: 08.04.2008
(51) Int. Cl.: G06F 9/445, G06F 11/14

(54) **Système et méthode pour gérer le redémarrage d'un équipement d'automatisme**
System und Verfahren zur Verwaltung eines Neustarts eines Automatisierungsgerätes
System and method for managing the restarting of automatic control equipment

(30) Priorité: 24.04.2007 FR 0754653
(43) Date de publication de la demande: 04.03.2009
(73) Titulaire: Schneider Electric Industries SAS, 92500 Rueil-Malmaison (FR)
(72) Inventeur: Piacibello, Jacques, 06600 Antibes (FR)
(74) Mandataire: Dufresne, Thierry

(56) Documents cités:
- EP-A- 1 562 112
- EP-A2- 0 393 631
- US-B1- 6 721 882

## Description

La présente invention se rapporte à un équipement d'automatisme et à une méthode mise en oeuvre dans cet équipement d'automatisme pour gérer la reprise de cet équipement après une coupure d'alimentation.

Un équipement d'automatisme désigne ci-après un automate programmable, une station de contrôle/commande, une commande numérique, ou tout module d'automatisme pouvant contenir et exécuter un programme application permettant de faire le contrôle/commande d'une application d'automatisme, comme notamment un variateur de vitesse ou un module logique.

Un équipement d'automatisme comporte une unité centrale (UC) et au moins un module d'entrées-sorties assurant la liaison entre l'unité centrale et des capteurs et préactionneurs de l'application d'automatisme à commander.

Habituellement, un équipement d'automatisme tel qu'un automate programmable est de construction modulaire, c'est-à-dire qu'il est composé de plusieurs modules qui communiquent entre eux par un bus fond de panier. Un automate programmable comporte typiquement :
- un module d'alimentation chargé de fournir les différentes tensions aux autres modules par le bus fond de panier et de signaler les coupures secteur,
- un rack permettant de fixer mécaniquement les modules et supportant le bus fond de panier sur lequel viennent se connecter électriquement les modules,
- un module unité centrale qui comporte au moins un processeur, une mémoire non volatile, en général non modifiable (type ROM), ou modifiable (type EEPROM ou FLASH), contenant le programme constructeur ("firmware") exprimé dans un langage spécifique au constructeur de l'équipement d'automatisme, une mémoire volatile et un gestionnaire des entrées/sorties, qui communiquent entre eux. La mémoire volatile (type RAM) contient, dans une première zone, le programme application (appelé également programme utilisateur) et dans une deuxième zone, les données, en particulier les images des états des modules d'entrées-sorties.
- plusieurs modules entrées/sorties de divers types en fonction du processus à commander,
- un ou plusieurs modules de communication vers des réseaux de communication (Ethernet,...) ou des interfaces de commande telles que écran, clavier...

Dans la suite de la description, il est défini que :
- Lors d'un démarrage ou redémarrage à froid de l'automate, le traitement du programme application reprend au début et toutes les données (entrées/sorties...) sont initialisées.
- Lors d'un démarrage ou redémarrage à chaud de l'automate après une coupure de l'alimentation électrique, le traitement du programme application reprend au début et les données qui ont été sauvegardées au moment de la coupure sont rechargées en mémoire volatile.

De manière connue, le programme application est stocké et exécuté dans la mémoire volatile et est sauvegardé dans une mémoire non volatile de type flash pour être récupéré en cas de coupure d'alimentation. Il est courant d'être amené à devoir modifier le programme application, par exemple en utilisant une station de programmation. Ces modifications peuvent être réalisées en ligne alors que le programme application est stocké et exécuté dans la mémoire volatile. Lorsque les modifications sont terminées, le programme application modifié est exécuté dans la mémoire volatile et progressivement sauvegardée dans la mémoire non volatile flash. La sauvegarde du programme application modifié n'a donc pas lieu avant sa première exécution dans la mémoire volatile.

Cependant, lorsqu'une coupure d'alimentation intervient alors que le programme application est en cours de modification ou déjà modifié, mais non totalement sauvegardé dans la mémoire non volatile flash, toutes les modifications sont perdues. Actuellement, dans cette situation, au redémarrage, l'équipement d'automatisme recharge dans la mémoire volatile, à partir de la mémoire non volatile flash, la dernière version du programme application disponible avant la modification. Pour garantir la cohérence entre les données et le programme application rechargé, l'équipement d'automatisme est alors redémarré à froid.

Cependant, dans certains cas, si les modifications sont mineures ou n'affectent pas la cartographie des données (appelé "mapping" en anglais) du programme application, le redémarrage à froid après la fin de la coupure de l'alimentation n'est pas nécessaire.

Le but de l'invention est donc de proposer un équipement d'automatisme et une méthode mise en oeuvre dans cet équipement d'automatisme permettant de décider d'un redémarrage à chaud ou à froid après une coupure d'alimentation.

Ce but est atteint par une méthode pour gérer le redémarrage d'un équipement d'automatisme, ledit équipement d'automatisme comprenant :
- une alimentation électrique principale,
- une mémoire volatile contenant des données et un programme application pour commander et/ou surveiller un processus à automatiser,
- au moins une première mémoire non volatile contenant une sauvegarde d'une version du programme application ainsi que d'une première signature associée à la cartographie des données de ce programme application dans la mémoire volatile,
ladite méthode étant caractérisée en ce qu'elle consiste à :
- sauvegarder, lors d'une coupure de l'alimentation électrique principale, dans une seconde mémoire non volatile de l'équipement d'automatisme, les données et une seconde signature associée à la cartographie des données dans la mémoire volatile du programme application qui est en cours d'exécution au moment de la coupure,
- après rétablissement de l'alimentation électrique principale, recharger le programme application dans la mémoire volatile à partir de la première mémoire non volatile,
- effectuer une comparaison entre la première signature et la seconde signature pour décider d'un redémarrage de l'équipement d'automatisme.

Selon une particularité, si la première signature et la seconde signature sont différentes, le redémarrage a lieu à froid.

Selon une autre particularité, la première mémoire flash stocke une troisième signature représentant un indice de création du programme application stocké dans la première mémoire flash, la méthode consistant à
- sauvegarder dans la seconde mémoire flash, au moment de la coupure de l'alimentation électrique principale, une quatrième signature représentant un indice de création du programme application qui était chargé dans la mémoire volatile au moment de la coupure,
- comparer, par exemple à l'aide de moyens de comparaison, la troisième signature et la quatrième signature pour décider du redémarrage de l'équipement d'automatisme.

Selon une autre particularité, si la troisième signature et la quatrième signature sont différentes, le redémarrage a lieu à froid.

Selon une autre particularité, la première mémoire flash stocke une cinquième signature représentative de l'effacement de variables au sein du programme application stocké dans la première mémoire flash. La méthode consiste alors à :
- sauvegarder dans la seconde mémoire flash, au moment de la coupure de l'alimentation électrique principale, une sixième signature représentative de l'effacement des variables au sein du programme application qui était chargé dans la mémoire volatile au moment de la coupure,
- comparer, par exemple à l'aide de moyens de comparaison, la cinquième signature et la sixième signature pour décider du redémarrage de l'équipement d'automatisme.

Selon une autre particularité, si la cinquième signature et la sixième signature sont différentes, le redémarrage a lieu à froid.

Selon une autre particularité, la première mémoire non volatile comporte deux zones mémoires stockant chacune une version distincte du programme application, une première version et une seconde version immédiatement antérieure à la première version.

L'invention concerne également un équipement d'automatisme qui comprend :
- une alimentation électrique principale,
- une mémoire volatile contenant des données et un programme application pour commander et/ou surveiller un processus à automatiser,
- au moins une première mémoire non volatile contenant une sauvegarde d'une version du programme application ainsi que d'une première signature associée à la cartographie des données de ce programme application dans la mémoire volatile,
ledit équipement étant caractérisé en ce qu'il comporte :
- une seconde mémoire non volatile,
- des moyens pour sauvegarder, lors d'une coupure de l'alimentation électrique principale, dans la seconde mémoire non volatile, les données et une seconde signature associée à la cartographie des données dans la mémoire volatile du programme application qui était en cours d'exécution au moment de la coupure,
- des moyens pour recharger le programme application dans la mémoire volatile à partir de la première mémoire non volatile après le rétablissement de l'alimentation électrique principale,
- des moyens pour effectuer une comparaison entre la première signature et la seconde signature pour décider d'un redémarrage de l'équipement d'automatisme.

Selon l'invention, l'équipement d'automatisme comprend des moyens pour effectuer un redémarrage à froid si la première signature et la seconde signature sont différentes.

Selon l'invention, la première mémoire non volatile se présente par exemple sous la forme d'une carte amovible.

Le document EP1562112 porte sur un équipement d'automatisme dans lequel l'utilisateur décide d'un redémarrage à chaud ou à froid.

Le document EP393631 décrit un système de gestion d'une installation d'air conditionné. Ce système comporte une mémoire ROM stockant un programme de démarrage, un programme principal, des premières données associées au programme de démarrage et une mémoire RAM stockant des secondes données utilisées lors de l'exécution du programme principal. Le système comporte notamment un module de gestion des coupures d'alimentation électrique. Lors d'une coupure d'alimentation électrique, la mémoire RAM est maintenue sous tension pendant une certaine durée. Tant que la mémoire RAM est alimentée et donc que les premières données stockées dans la RAM sont égales aux secondes données stockées dans la ROM, le microprocesseur poursuit l'exécution du programme principal. En revanche, lorsque les premières données et les secondes données diffèrent, cela signifie que la RAM n'est plus alimentée et qu'elle a perdu ses données. Lors du rétablissement de l'alimentation, des données initiales stockées dans la ROM sont transférées dans la RAM et l'exécution du programme principal peut reprendre.

D'autres caractéristiques et avantages vont apparaître dans la description détaillée qui suit en se référant à un mode de réalisation donné à titre d'exemple et représenté par les dessins annexés sur lesquels :
- la figure 1 représente les moyens de mémorisation mis en oeuvre dans l'équipement d'automatisme,
- la figure 2 illustre, grâce à un organigramme, le fonctionnement de l'équipement d'automatisme lors d'une coupure d'alimentation,
- la figure 3 montre la deuxième partie de l'organigramme de la figure 2.

La structure d'un équipement d'automatisme tel qu'un automate programmable est bien connue. Elle n'est donc pas détaillée dans la présente demande.

Un automate programmable est alimenté par une alimentation électrique principale et comporte une unité centrale connectée par l'intermédiaire d'un bus fond de panier à plusieurs modules entrées/sorties et dotée d'un microprocesseur et de divers moyens de mémorisation. L'unité centrale contient notamment une mémoire volatile, généralement de type RAM, destinée à stocker des données et un programme application (appelé également programme utilisateur) exécuté pour piloter un processus à automatiser. Les moyens de mémorisation comprennent également une mémoire non volatile de type ROM, modifiable ou non, stockant le programme constructeur (appelé également "firmware").

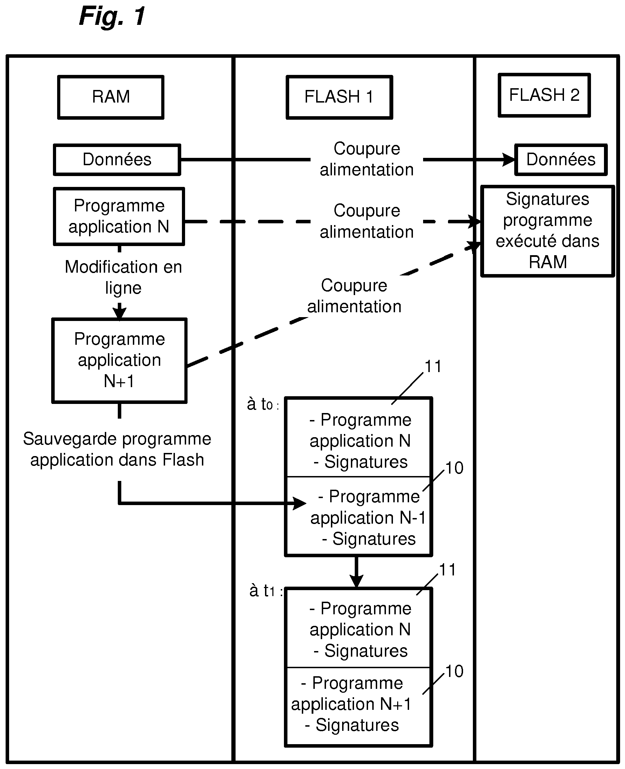

En outre, selon l'invention, les moyens de mémorisation comportent également une première mémoire non volatile de type NAND flash SD ("Secure Digital"), ci-après désignée première mémoire flash (désignée Flash 1 sur la figure 1), dotée de deux zones mémoires distinctes 10, 11 dans chacune desquelles est sauvegardée une version différente du programme application. La première zone mémoire 10 stocke par exemple la version (désignée ci-après version N-1) du programme application immédiatement antérieure à celle en cours d'exécution et la deuxième zone mémoire 11 stocke la version (désignée ci-après version N) du programme application en cours d'exécution dans la mémoire volatile (RAM). A chaque modification du programme application, la nouvelle version du programme est sauvegardée dans cette première mémoire flash (Flash 1) et remplace la version la plus ancienne. Ainsi, après la sauvegarde d'une nouvelle version (à t1), la première mémoire flash (Flash 1) contient dans sa première zone mémoire 10 une nouvelle version (désignée ci-après version N+1) du programme application et dans sa deuxième zone mémoire 11 la version (N) immédiatement antérieure (figure 1).

La première mémoire flash (Flash 1) peut par exemple être amovible ce qui permet de la remplacer, lorsque le microprocesseur est hors tension, par une carte similaire contenant par exemple une version modifiée du programme application, telle qu'une nouvelle version du programme application.

Pour chacune des versions du programme application, plusieurs signatures sont générées et stockées dans la première mémoire flash (Flash 1) avec le programme application auquel elles sont associées. Ces signatures sont les suivantes:
- Une première signature CID (pour "Creation ID") correspond à un indice de création du code du programme application. Cette signature est générée lors de la création du programme application et n'est ensuite plus modifiable.
- Une seconde signature MID (pour "Modification ID") correspond par exemple à un indice de modification du code du programme application. Cette signature MID est modifiée à chaque modification du programme application.
- Une troisième signature LID (pour "Layout ID") est par exemple associée à la cartographie des données du programme application dans la mémoire volatile. A chaque modification de cette cartographie, la signature LID est modifiée. Par exemple si un nouveau bloc programme contenant des nouvelles données est créé dans le programme application, la signature LID est modifiée. Si la signature LID est modifiée la signature MID est également modifiée.
- une quatrième signature DID (pour "Deletion ID") est par exemple un indice signalant l'effacement de données au sein du programme application. Si la signature DID est modifiée la signature MID est également modifiée.

Les moyens de mémorisation comprennent en outre une deuxième mémoire non volatile de type flash, désignée ci-après deuxième mémoire Flash (désignée Flash 2 sur la figure 1), destinée à stocker les données présentes dans la mémoire volatile (RAM) lors d'une coupure de l'alimentation électrique principale. Cette deuxième mémoire Flash (Flash 2) sera par exemple à écriture rapide pour y écrire rapidement les données au moment de la coupure de l'alimentation.

Selon l'invention, cette seconde mémoire flash est également destinée à accueillir les signatures CID', MID', LID', DID' du programme application qui est en cours d'exécution dans la mémoire volatile (RAM) lors d'une coupure de l'alimentation (figure 1, traits en pointillés). Ces signatures ont une structure identique à celles écrites dans la première mémoire flash (Flash 1) pour chacune des sauvegardes du programme application.

Une alimentation électrique auxiliaire, constituée par exemple d'une capacité, est employée pour assurer l'alimentation de la mémoire volatile le temps de l'écriture des données et des signatures dans la seconde mémoire flash (Flash 2) au moment de la coupure de l'alimentation électrique principale.

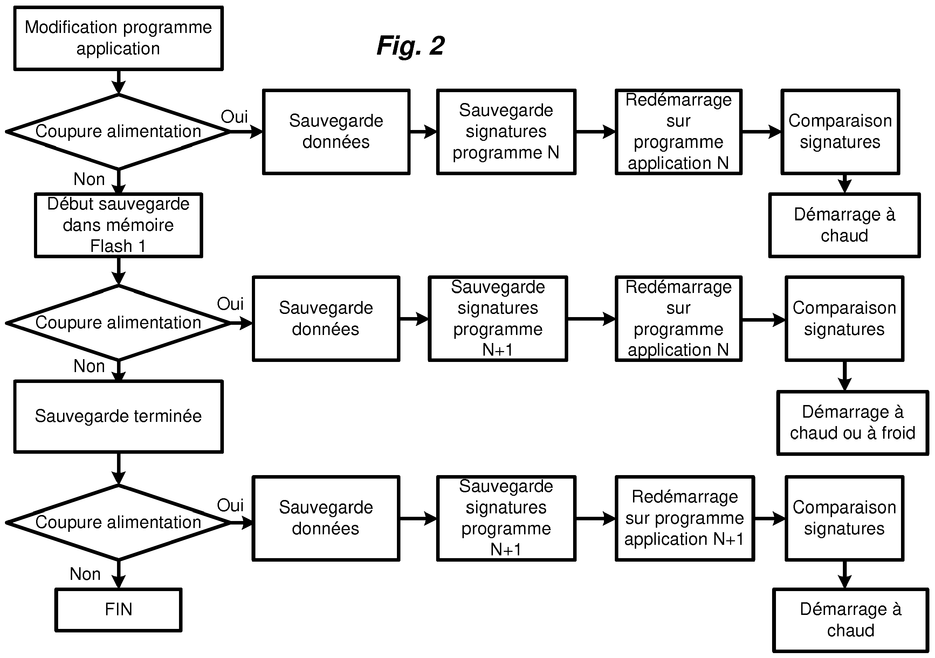

Selon l'invention, en référence à la figure 2, lorsqu'une coupure de l'alimentation électrique principale intervient, l'équipement d'automatisme effectue systématiquement une sauvegarde, dans la seconde mémoire flash (Flash 2), des données et des signatures CID', MID', LID', DID' représentatives du programme application en cours d'exécution dans la mémoire volatile (figure 1).

Ensuite, après le rétablissement de l'alimentation électrique, selon le moment où est intervenue la coupure de l'alimentation électrique principale, l'équipement d'automatisme effectuera un redémarrage à chaud ou à froid.

En référence à l'organigramme représenté sur la figure 2, si la coupure de l'alimentation électrique principale intervient alors que le programme application est en cours de modification dans la mémoire volatile (RAM) qui est non sauvegardée, toutes les modifications se trouvent perdues. La version N+1 du programme application n'a donc pas encore été sauvegardée dans la première mémoire flash (Flash 1). Les modifications étant en cours au moment de la coupure, le programme exécuté dans la mémoire volatile (RAM) n'était alors pas encore en version N+1 mais en version N. La deuxième mémoire flash (Flash 2) comporte donc les données et les signatures du programme application de la version N.

Après la fin de la coupure électrique, au redémarrage, l'équipement d'automatisme recharge donc la version la plus récente du programme application qui est disponible dans la première mémoire flash (Flash 1), c'est-à-dire la version N. Pour décider d'un redémarrage à chaud ou à froid, l'équipement d'automatisme effectue, à l'aide de moyens de comparaison, une comparaison entre les signatures CID, LID, DID du programme application rechargé provenant de la première mémoire flash (Flash 1) et les signatures CID', LID', DID' du programme application stockées dans la seconde mémoire flash (Flash 2) au moment de la coupure. Etant donné que le programme application exécuté dans la mémoire volatile (RAM) au moment de la coupure était de la version N, ces signatures n'ont pas été modifiées par rapport à celles sauvegardées dans la première mémoire flash. Par conséquent, l'équipement d'automatisme peut repartir à chaud.

Si la coupure de l'alimentation électrique principale intervient alors que le programme application a été modifié et est en cours d'exécution dans la mémoire volatile (RAM) mais non encore sauvegardé dans la première mémoire Flash (Flash 1), la situation est différente. Le programme application exécuté dans la mémoire volatile (RAM) est la version N+1 alors que la version la plus récente disponible dans la première mémoire flash (Flash 1) est la version N. Après la fin de la coupure de l'alimentation électrique principale, le redémarrage de l'équipement d'automatisme a donc lieu sur la version N du programme application. En revanche, les signatures CID', LID', DID' sauvegardées au moment de la coupure dans la seconde mémoire flash (Flash 2) sont celles réalisées sur le programme application de version N+1 qui était alors en cours d'exécution lors de la coupure. Dans cette situation, avant de redémarrer, l'équipement d'automatisme doit comparer les signatures CID', LID', DID' issues de la seconde mémoire flash (Flash 2) avec les signatures CID, LID, DID issues de la première mémoire flash (Flash 1) et relatives au programme rechargé et vérifier si chacune de ces signatures a été modifiée entre la version N+1 et la version N.

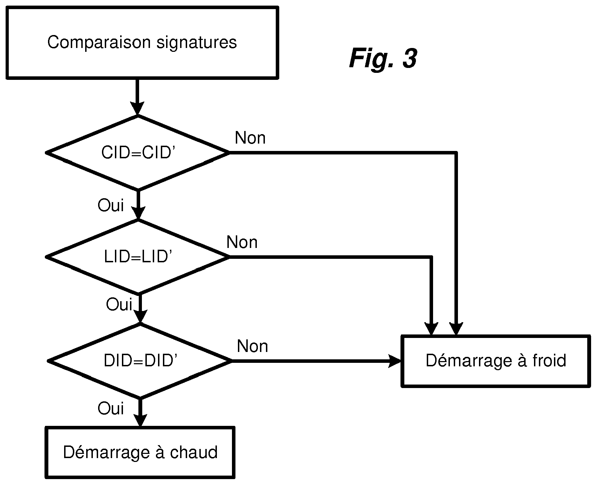

En référence à la figure 3, si la signature CID est différente de la signature CID', le redémarrage aura lieu à froid. Si en revanche la signature CID est identique à la signature CID', l'équipement d'automatisme compare alors la signature LID à la signature LID'. Si la signature LID, représentative de la cartographie des données du programme application dans la mémoire, est différente de la signature LID', le redémarrage aura lieu à froid. En revanche si cette signature LID est identique à la signature LID', l'équipement d'automatisme compare la signature DID à la signature DID'. Si cette signature DID est différente de la signature DID', le redémarrage aura lieu à froid. En revanche si cette signature DID est identique à la signature DID', le redémarrage pourra avoir lieu à chaud. En résumé, si aucune de ces trois signatures n'est modifiée, le redémarrage peut être effectué à chaud mais si au moins l'une de ces signatures est modifiée, le redémarrage devra être effectué à froid. Bien entendu, l'ordre des comparaisons entre les signatures peut être modifié et n'influe en rien sur le fonctionnement de l'équipement d'automatisme au redémarrage.

Enfin, si la coupure de l'alimentation électrique principale intervient alors que la sauvegarde du programme application modifié est terminée, le redémarrage après la fin de la coupure peut donc avoir lieu sur la version N+1 du programme application qui est alors disponible dans la première mémoire flash (Flash 1). Ce redémarrage peut être effectué à chaud car les signatures du programme en cours d'exécution (la version N+1) dans la mémoire volatile (RAM) au moment de la coupure sont identiques à celles stockées dans la première mémoire flash (Flash 1).

En ce qui concerne la signature MID, sa seule modification entre la version N et N+1 du programme application n'est pas suffisante pour occasionner le redémarrage à froid de l'équipement d'automatisme après une coupure de l'alimentation.

Selon l'invention, si la première mémoire flash (Flash 1) employée est amovible et remplacée lorsque le microprocesseur est hors tension par une carte similaire, une comparaison des signatures est également nécessaire lors du redémarrage. Si la nouvelle carte stocke un nouveau programme application, sa signature CID est différente de celle du programme application exécuté précédemment dans la mémoire volatile. Dans ce cas, comme décrit ci-dessus, le redémarrage aura lieu à froid.

Il est bien entendu que l'on peut, sans sortir du cadre de l'invention, imaginer d'autres variantes et perfectionnements de détail et de même envisager l'emploi de moyens équivalents.

## Revendications

1. Méthode pour gérer le redémarrage d'un équipement d'automatisme, ledit équipement d'automatisme comprenant :
- une alimentation électrique principale,
- une mémoire volatile (RAM) contenant des données et un programme application pour commander et/ou surveiller un processus à automatiser,
- au moins une première mémoire non volatile (Flash 1) contenant une sauvegarde d'une version du programme application ainsi que d'une signature, dite première signature (LID), associée à la cartographie des données de ce programme application dans la mémoire volatile, d'une signature, dite troisième signature (CID) représentant un indice de création du programme application stocké dans la première mémoire non volatile (Flash 1), d'une signature, dite cinquième signature (DID), représentative de l'effacement de variables au sein du programme application stocké dans la première mémoire non volatile (Flash 1),
ladite méthode consistant à :
- sauvegarder, lors d'une coupure de l'alimentation électrique principale, dans une seconde mémoire non volatile (Flash 2) de l'équipement d'automatisme, les données et une signature, dite seconde signature (LID'), associée à la cartographie des données dans la mémoire volatile (RAM) du programme application qui est en cours d'exécution au moment de la coupure, une signature, dite quatrième signature (CID'), représentant un indice de création du programme application qui était chargé dans la mémoire volatile (RAM) au moment de la coupure, une signature, dite sixième signature (DID'), représentative de l'effacement des variables au sein du programme application qui était chargé dans la mémoire volatile (RAM) au moment de la coupure,
- après rétablissement de l'alimentation électrique principale, recharger le programme application dans la mémoire volatile (RAM) à partir de la première mémoire non volatile (Flash 1),
- décider, par comparaison entre les signatures, d'un redémarrage à chaud de l'équipement d'automatisme, dans lequel le traitement du programme application reprend au début avec les données sauvegardées lors de la coupure d'alimentation électrique principale qui sont rechargées en mémoire volatile, ou d'un redémarrage à froid de l'équipement d'automatisme dans lequel le traitement du programme application reprend au début avec les données qui sont initialisées, et :
- si la première signature (LID) et la seconde signature (LID') sont différentes, le redémarrage a lieu à froid,
- si la troisième signature (CID) et la quatrième signature (CID') sont différentes, le redémarrage a lieu à froid,
- si la cinquième signature (DID) et la sixième signature (DID') sont différentes, le redémarrage a lieu à froid.

2. Méthode selon la revendication 1, **caractérisée en ce que** la première mémoire non volatile (Flash 1) comporte deux zones mémoires stockant chacune une version distincte du programme application, une première version et une seconde version immédiatement antérieure à la première version.

3. Equipement d'automatisme comprenant :
- une alimentation électrique principale,
- une mémoire volatile (RAM) contenant des données et un programme application pour commander et/ou surveiller un processus à automatiser,
- au moins une première mémoire non volatile (Flash 1) contenant une sauvegarde d'une version du programme application ainsi que d'une signature, dite première signature (LID) associée à la cartographie des données de ce programme application dans la mémoire volatile (RAM), d'une signature, dite troisième signature (CID) représentant un indice de création du programme application stocké dans la première mémoire non volatile (Flash 1), d'une signature, dite cinquième signature (DID), représentative de l'effacement de variables au sein du programme application stocké dans la première mémoire non volatile (Flash 1),
- une seconde mémoire non volatile (Flash 2),
- des moyens pour sauvegarder, lors d'une coupure de l'alimentation électrique principale, dans la seconde mémoire non volatile (Flash 2), les données et une signature, dite seconde signature (LID'), associée à la cartographie des données dans la mémoire volatile (RAM) du programme application qui était en cours d'exécution au moment de la coupure, une signature, dite quatrième signature (CID'), représentant un indice de création du programme application qui était chargé dans la mémoire volatile (RAM) au moment de la coupure, une signature, dite sixième signature (DID'), représentative de l'effacement des variables au sein du programme application qui était chargé dans la mémoire volatile (RAM) au moment de la coupure,
- des moyens pour recharger le programme application dans la mémoire volatile (RAM) à partir de la première mémoire non volatile (Flash 1) après le rétablissement de l'alimentation électrique principale,
- des moyens pour effectuer une comparaison entre les signatures pour décider d'un redémarrage à chaud de l'équipement d'automatisme, dans lequel le traitement du programme application reprend au début avec les données sauvegardées lors de la coupure d'alimentation électrique principale qui sont rechargées en mémoire volatile, ou d'un redémarrage à froid de l'équipement d'automatisme, dans lequel le traitement du programme application reprend au début avec les données qui sont initialisées, et :
- si la première signature (LID) et la seconde signature (LID') sont différentes, le redémarrage a lieu à froid,
- si la troisième signature (CID) et la quatrième signature (CID') sont différentes, le redémarrage a lieu à froid,
- si la cinquième signature (DID) et la sixième signature (DID') sont différentes, le redémarrage a lieu à froid.

4. Equipement d'automatisme selon la revendication 3, **caractérisé en ce que** la première mémoire non volatile (Flash 1) comporte deux zones mémoires stockant chacune une version distincte du programme application, une première version et une seconde version immédiatement antérieure à la première version.

5. Equipement d'automatisme la revendication 3 ou 4, **caractérisé en ce que** la première mémoire non volatile (Flash 1) se présente sous la forme d'une carte amovible.

## Patentansprüche

1. Verfahren zur Verwaltung des Neustarts eines Automatisierungsgeräts, wobei das Automatisierungsgerät Folgendes enthält:
- eine Hauptstromversorgung,
- einen flüchtigen Speicher (RAM), der Daten und ein Anwendungsprogramm enthält, um einen zu automatisierenden Prozess zu steuern und/oder zu überwachen,
- mindestens einen ersten nichtflüchtigen Speicher (Flash 1), der eine Sicherung einer Version des Anwendungsprogramms sowie einer Signatur, erste Signatur (LID) genannt, die der Kartierung der Daten dieses Anwendungsprogramms im flüchtigen Speicher zugeordnet ist, einer Signatur, dritte Signatur (CID) genannt, die einen Generierungsindex des im ersten nichtflüchtigen Speicher (Flash 1) gespeicherten Anwendungsprogramms darstellt, einer Signatur, fünfte Signatur (DID) genannt, die für das Löschen von Variablen innerhalb des im ersten nichtflüchtigen Speicher (Flash 1) gespeicherten Anwendungsprogramms repräsentativ ist, enthält,
wobei das Verfahren darin besteht:
- bei einer Unterbrechung der Hauptstromversorgung in einem zweiten nichtflüchtigen Speicher (Flash 2) des Automatisierungsgeräts die Daten und eine Signatur, zweite Signatur (LID') genannt, die der Kartierung der Daten im flüchtigen Speicher (RAM) des Anwendungsprogramms zugeordnet ist, das zum Zeitpunkt der Unterbrechung gerade ausgeführt wird, eine Signatur, vierte Signatur (CID') genannt, die einen Generierungsindex des Anwendungsprogramms darstellt, das zum Zeitpunkt der Unterbrechung im flüchtigen Speicher (RAM) geladen war, eine Signatur, sechste Signatur (DID') genannt, die für das Löschen von Variablen innerhalb des Anwendungsprogramms repräsentativ ist, das zum Zeitpunkt der Unterbrechung im flüchtigen Speicher (RAM) geladen war, zu sichern,
- nach der Wiederherstellung der Hauptstromversorgung das Anwendungsprogramm ausgehend vom ersten nichtflüchtigen Speicher (Flash 1) erneut in den flüchtigen Speicher (RAM) zu laden,
- durch Vergleich zwischen den Signaturen einen Warm-Neustart des Automatisierungsgeräts, wobei die Verarbeitung des Anwendungsprogramms am Anfang mit den bei der Unterbrechung der Hauptstromversorgung gesicherten Daten wieder aufgenommen wird, die erneut in den flüchtigen Speicher geladen werden, oder einen Kalt-Neustart des Automatisierungsgeräts zu veranlassen, wobei die Verarbeitung des Anwendungsprogramms am Anfang mit den Daten wieder aufgenommen wird, die initialisiert werden, und:
- wenn die erste Signatur (LID) und die zweite Signatur (LID') unterschiedlich sind, findet der Neustart kalt statt,
- wenn die dritte Signatur (CID) und die vierte Signatur (CID') unterschiedlich sind, findet der Neustart kalt statt,
- wenn die fünfte Signatur (DID) und die sechste Signatur (DID') unterschiedlich sind, findet der Neustart kalt statt.

2. Verfahren nach Anspruch 1, **dadurch gekennzeichnet, dass** der erste nichtflüchtige Speicher (Flash 1) zwei Speicherzonen aufweist, die je eine andere Version des Anwendungsprogramms speichern, eine erste Version und eine zweite Version direkt vor der ersten Version.

3. Automatisierungsgerät, das Folgendes enthält:
- eine Hauptstromversorgung,
- einen flüchtigen Speicher (RAM), der Daten und ein Anwendungsprogramm enthält, um einen zu automatisierenden Prozess zu steuern und/oder zu überwachen,
- mindestens einen ersten nichtflüchtigen Speicher (Flash 1), der eine Sicherung einer Version des Anwendungsprogramms sowie einer Signatur, erste Signatur (LID) genannt, die der Kartierung der Daten dieses Anwendungsprogramms im flüchtigen Speicher (RAM) zugeordnet ist, einer Signatur, dritte Signatur (CID) genannt, die einen Generierungsindex des im ersten nichtflüchtigen Speicher (Flash 1) gespeicherten Anwendungsprogramms darstellt, einer Signatur, fünfte Signatur (DID) genannt, die für das Löschen von Variablen innerhalb des im ersten nichtflüchtigen Speicher (Flash 1) gespeicherten Anwendungsprogramms repräsentativ ist, enthält,
- einen zweiten nichtflüchtigen Speicher (Flash 2),
- Einrichtungen, um bei einer Unterbrechung der Hauptstromversorgung im zweiten nichtflüchtigen Speicher (Flash 2) die Daten und eine Signatur, zweite Signatur (LID') genannt, die der Kartierung der Daten im flüchtigen Speicher (RAM) des Anwendungsprogramms zugeordnet ist, das zum Zeitpunkt der Unterbrechung gerade ausgeführt wurde, eine Signatur, vierte Signatur (CID') genannt, die einen Generierungsindex des Anwendungsprogramms darstellt, das zum Zeitpunkt der Unterbrechung im flüchtigen Speicher (RAM) geladen war, eine Signatur, sechste Signatur (DID') genannt, die für das Löschen der Variablen innerhalb des Anwendungsprogramms repräsentativ ist, das zum Zeitpunkt der Unterbrechung im flüchtigen Speicher (RAM) geladen war, zu sichern,
- Einrichtungen, um das Anwendungsprogramm nach der Wiederherstellung der Hauptstromversorgung ausgehend vom ersten nichtflüchtigen Speicher (Flash 1) wieder in den flüchtigen Speicher (RAM) zu laden,
- Einrichtungen zur Ausführung eines Vergleichs zwischen den Signaturen, um einen Warm-Neustart des Automatisierungsgeräts, wobei die Verarbeitung des Anwendungsprogramms am Anfang mit den bei der Unterbrechung der Hauptstromversorgung gesicherten Daten wieder aufgenommen wird, die wieder in den flüchtigen Speicher geladen werden, oder einen Kalt-Neustart des Automatisierungsgeräts zu veranlassen, wobei die Verarbeitung des Anwendungsprogramms am Anfang mit den Daten wieder aufgenommen wird, die initialisiert werden, und:
- wenn die erste Signatur (LID) und die zweite Signatur (LID') unterschiedlich sind, der Neustart kalt stattfindet,
- wenn die dritte Signatur (CID) und die vierte Signatur (CID') unterschiedlich sind, der Neustart kalt stattfindet,
- wenn die fünfte Signatur (DID) und die sechste Signatur (DID') unterschiedlich sind, der Neustart kalt stattfindet.

4. Automatisierungsgerät nach Anspruch 3, **dadurch gekennzeichnet, dass** der erste nichtflüchtige Speicher (Flash 1) zwei Speicherzonen aufweist, die je eine andere Version des Anwendungsprogramms speichern, eine erste Version und eine zweite Version direkt vor der ersten Version.

5. Automatisierungsgerät nach Anspruch 3 oder 4, **dadurch gekennzeichnet, dass** der erste nichtflüchtige Speicher (Flash 1) in Form einer entfernbaren Karte vorliegt.

## Claims

1. Method for managing the restarting of an automation device, said automation device comprising:
- a main electrical power supply,
- a volatile memory (RAM) containing data and an application program for controlling and/or monitoring a process to be automated,
- at least one first non-volatile memory (Flash 1) containing a backup of a version of the application program and of a signature, called first signature (LID), associated with the mapping of the data of this application program in the volatile memory, of a signature, called third signature (CID), representing a creation index of the application program stored in the first non-volatile memory (Flash 1), of a signature, called fifth signature (DID), representative of the deletion of variables in the application program stored in the first non-volatile memory (Flash 1),
said method consisting in:
- backing up, on an outage of the main electrical power supply, in a second non-volatile memory (Flash 2) of the automation device, the data and a signature, called second signature (LID'), associated with the mapping of the data, in the volatile memory (RAM), of the application program which is running at the time of the outage, a signature, called fourth signature (CID'), representing a creation index of the application program which was loaded in the volatile memory (RAM) at time of the outage, a signature, called sixth signature (DID'), representative of the deletion of the variables in the application program which was loaded in the volatile memory (RAM) at the time of the outage,
- after the main electrical power supply has been restored, reloading the application program into the volatile memory (RAM) from the first non-volatile memory (Flash 1),
- deciding, by comparing signatures, on a hot restart of the automation device, in which the processing of the application program resumes at the start with the data backed up at the time of the outage of the main electrical power supply, which data is reloaded into volatile memory, or on a cold restart of the automation device, in which the processing of the application program resumes at the start with the data that is initialized, and:
- if the first signature (LID) and the second signature (LID') are different, the restart takes place cold,
- if the third signature (CID) and the fourth signature (CID') are different, the restart takes place cold,
- if the fifth signature (DID) and the sixth signature (DID') are different, the restart takes place cold.

2. Method according to one of Claim 1, **characterized in that** the first non-volatile memory (Flash 1) comprises two memory areas, each storing a different version of the application program, a first version and a second version immediately prior to the first version.

3. Automation device comprising:
- a main electrical power supply,
- a volatile memory (RAM) containing data and an application program for controlling and/or monitoring a process to be automated,
- at least one first non-volatile memory (Flash 1) containing a backup of a version of the application program and of a signature, called first signature (LID), associated with the mapping of the data of this application program in the volatile memory (RAM), of a signature, called third signature (CID), representing a creation index of the application program stored in the first non-volatile memory (Flash 1), of a signature, called fifth signature (DID), representative of the deletion of variables in the application program stored in the first non-volatile memory (Flash 1),
- a second non-volatile memory (Flash 2),
- means for backing up, on an outage of the main electrical power supply, in the second non-volatile memory (Flash 2), the data and a signature, called second signature (LID'), associated with the mapping of the data in the volatile memory (RAM) of the application program which was running at the time of the outage, a signature, called fourth signature (CID'), representing a creation index of the application program which was loaded in the volatile memory (RAM) at time of the outage, a signature, called sixth signature (DID'), representative of the deletion of the variables in the application program which was loaded in the volatile memory (RAM) at the time of the outage,
- means for reloading the application program into the volatile memory (RAM) from the first non-volatile memory (Flash 1) after the main electrical power supply has been restored,
- means for comparing signatures to decide on a hot restart of the automation device, in which the processing of the application program resumes at the start with the data backed up at the time of the outage of the main electrical power supply, which data is reloaded into volatile memory, or on a cold restart of the automation device, in which the processing of the application program resumes at the start with the data that is initialized, and:
- if the first signature (LID) and the second signature (LID') are different, the restart takes place cold,
- if the third signature (CID) and the fourth signature (CID') are different, the restart takes place cold,
- if the fifth signature (DID) and the sixth signature (DID') are different, the restart takes place cold.

4. Automation device according to Claim 3, **characterized in that** the first non-volatile memory (Flash 1) comprises two memory areas each storing a different version of the application program, a first version and a second version immediately prior to the first version.

5. Automation device according to Claim 3 or 4, **characterized in that** the first non-volatile memory (Flash 1) takes the form of a removable card.
